# EUROPÄISCHE PATENTSCHRIFT

(11) **EP 1 597 863 B1**
(45) Veröffentlichungstag und Bekanntmachung des Hinweises auf die Patenterteilung: **14.04.2010**
(21) Anmeldenummer: 04707870.4
(22) Anmeldetag: 04.02.2004
(51) Int. Cl.: H04W 72/00

(54) **VERFAHREN ZUM AUTOMATISCHEN ANPASSEN EINES ÜBERTRAGUNGSKANALS**
METHOD FOR AUTOMATICALLY ADAPTING A TRANSMISSION CHANNEL
PROCEDE POUR L'ADAPTATION AUTOMATIQUE D'UN CANAL DE TRANSMISSION

(30) Priorität: 17.02.2003 DE 10306453
(43) Veröffentlichungstag der Anmeldung: 23.11.2005
(73) Patentinhaber: Deutsche Telekom AG, 53113 Bonn (DE)
(72) Erfinder: BINDEL, Frank, 53639 Königswinter (DE); BRACKMANN, Ludwig, 53225 Bonn (DE)
(74) Vertreter: Braun-Dullaeus, Karl-Ulrich
(86) Internationale Anmeldenummer: PCT/DE2004/000179
(87) Internationale Veröffentlichungsnummer: WO 2004/073258

(56) Entgegenhaltungen:
- WO-A-01/35585
- US-A1- 2002 035 699
- US-A1- 2002 054 578
- JOHANSSON P ET AL: "SHORT RANGE BASED AD-HOC NETWORKING: PERFORMANCE AND PROPERTIES" ICC '99. 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY: IEEE, US, Bd. 3, 6. Juni 1999 (1999-06-06), Seiten 1414-1420, XP000903607 ISBN: 0-7803-5285-8

## Beschreibung

Die vorliegende Erfindung betrifft ein Verfahren zum Datenaustausch vermittels einer drahtlosen Verbindung, wobei ein Nutzer mit einem oder mehreren portablen Endgeräten sich im Sende- und Empfangsbereich mindestens eines Netzes befindet, wobei sich das oder die Endgeräte automatisch beim Netz zum Aufbau einer Verbindung anmelden und wobei im Rahmen der jeweils hergestellten Verbindung ein Übertragungskanal für den Datenaustausch zur Verfügung gestellt wird.

Je nach dem, wo sich ein Nutzer gerade aufhält, stehen ihm mehr oder weniger Möglichkeiten zur Verfügung, über drahtlose Verbindungen Daten auszutauschen. Meist hält er sich im Einzugsbereich von GSM-Netzen für die mobile Telephonie auf, während ihm nur bei bestimmten Gelegenheiten Nahfunknetze, wie Bluetooth oder WLAN, zur Verfügung stehen.

Generell ist der Austausch großer Datenmengen je nach Art der gerade nutzbaren Verbindung mit unterschiedlichem Aufwand hinsichtlich der Übertragungszeit und der Kosten verbunden. Aus diesem Grund hat der Nutzer ein Interesse daran, beispielsweise mit dem Download einer MP3-Datei zu warten, bis er über WLAN in das Internet kommt. Er wird die Datei nicht über GSM abrufen wollen. Der Nutzer wartet also, bis die mitgeführten Endgeräte in den Einzugsbereich eines Verteilers oder Accesspoints gelangen, der ihnen über ein lokales Netz einen Zugang zu externen Netzen verschafft. Als besonderes Ausführungsbeispiel solcher lokalen Netze sei das sogenannte "café computing" genannt. Dahinter verbirgt sich das schon etablierte Konzept, nach dem ein Nutzer beispielsweise ein Café betritt, seinen Laptop öffnet, sich per Funk (z.B. Bluetooth) in das lokale Netzwerk des Cafés über einen Accesspoint einloggt und, während er einen Cappuccino genießt, E-Mails beantwortet oder im Internet surft. Neben ihm liegt noch sein Handy, mit dem er via GSM telephoniert oder SMS-Nachrichten austauscht.

Bei derartigen Einrichtungen ist es wiederum von Nachteil, dass für jedes Gerät, das sich in den Café-Accesspoint einloggt, eine maximale Bandbreite reserviert wird, auch wenn der Nutzer momentan nur wenig Kapazität benötigt. So werden für relativ geringe Anforderungen unnötig Ressourcen verschwendet. Aus Sicht des Café-Betreibers ist das unbefriedigend, da Ressourcen blockiert werden, die er anderen Nutzern gewinnbringend anbieten könnte.

Das US 2002/0035699 A1 zeigt ein auf WLAN oder Bluetooth basierendes Netz, in dem sich der Nutzer beim Anmelden im Netz als Mitglied einer bestimmten Nutzergruppe identifiziert. Der Nutzer erhält dann Zugriff auf die der Nutzergruppe im Netz zur Verfügung gestellten Bandbreite.

Aus der US 2002/0054578 A1 ist ein Verfahren zur Qualitätssicherung der Datenübertragung in einem Mobilfunknetz bekannt, in dem je nach Art der Daten ein bestimmtes Übertragungsprotokoll vorgegeben ist.

Aufgabe der Erfindung ist es nunmehr, ein Verfahren zum Datenaustausch im Rahmen derartiger Konzepte zu schaffen, das sich mit kostengünstigen Mitteln einfach umsetzen lässt und das bei hohem Bedienkomfort automatisch eine effiziente Verteilung der vorhandenen Ressourcen gewährleistet und damit zur Steigerung der Akzeptanz beiträgt.

Diese Aufgaben werden durch das Verfahren mit den kennzeichnenden Merkmalen des Anspruch 1 gelöst.

Der Hintergrund der Erfindung liegt darin, den Aufenthaltsort.eines Nutzers und seiner entsprechenden Endgeräte zu registrieren und ihm je nach Aufenthaltsort die dort möglichen Verbindungen automatisch und mit der für den Datenaustausch benötigten Kapazität zur Verfügung zu stellen. Diese Anpassung bezieht sich auf die Art des oder der Endgeräte und auf die Art, insbesondere die Menge, der zu Übertragung anstehenden Daten. Sie erfolgt automatisch durch den Administrator, der dem Netz zugeordnet ist.

Die Erfindung kann sich auf zwei Ebenen manifestieren. So kann sich der Nutzer mit seinen Endgeräten über die Dauer der Verbindung hinweg an einem Ort, beispielsweise im Bereich eines Café- Accesspoint, aufhalten. Dann bewirkt das erfinderische Verfahren, dass der diesem "internen" Netz zugeordnete Administrator dem Nutzer eine optimierte Verbindung zur Verfügung stellt. Anderseits wird in einer übergeordneten Ebene des Verfahrens die Bewegung der Endgeräte über die Grenzen von Netzen hinweg verfolgt wird, wobei je nach Aufenthaltsort Verbindungen zu den dort etablierten Netzen hergestellt werden. Der Nutzer kann sich also frei bewegen, während das System darauf achtet, dass er seine Datenübertragung unter jeweils optimierten Randbedingungen, insbesondere hinsichtlich der Kosten, der Sicherheit und/oder der Übertragungsleistung, durchführen kann. Unter den zur Verfügung stehenden Kanälen wird der für die Erfüllung der Aufgabe geeignete ausgewählt, wobei dieser darüber hinaus in seiner Übertragungskapazität einstellbar ist. Der Administrator übernimmt somit die Funktion eines Routers, der automatisch den best möglichen Übertragungsweg auswählt. Es kann auch vorteilhaft sein, wenn der Nutzer Prioritäten vorgegeben kann.

Zur Umsetzung des Verfahrens im Rahmen eines lokalen Netzes, beispielsweise im Café, wird als Administrator vorteilhafter Weise ein fest installiertes Gerät eingesetzt, wobei das portable Endgerät über den Administrator Zugang erhält zu einem externen Kommunikationsnetz, insbesondere zum Internet oder zu einem Telephonnetz. Dabei wird die Verbindung zwischen Endgerät und Administrator über ein Nahfunknetz, insbesondere Blue Tooth oder WLAN, herstellt.

Erfindungsgemäß werden also die vorhandenen Möglichkeiten und Ressourcen flexibel an die aktuellen Anforderungen angepasst. Um das zu bewerkstelligen, wird in einer vorteilhaften Ausführungsform zunächst die Art der einem Nutzer zuzuordnenden portablen Endgeräte sowie die Art der zur Übertragung anstehenden Daten ermittelt. Aufgrund der so ermittelten Bedingungen wird dann eine unter mehreren zur Verfügung stehenden Verbindungen ausgewählt. Letztendlich wird zwischen Verteiler und portablem Endgeräte die Verbindung hergestellt und freigeschaltet.

Weiterhin ist es von Vorteil, wenn die Nutzung des lokalen Netzwerks mit unterschiedlichen Endgeräten möglich ist. So ist es gleichgültig, welches Kommunikationsgerät der das Café betretende Nutzer auch bei sich führt. Er kann sich eines PDA, eines Laptops oder eines BlackBerry bedienen. Erfindungsgemäß ist die Kommunikation mit dem Endgerät über das drahtlose Netz des Cafés möglich, ohne dass ein externer Provider mit zusätzlich anfallenden Kosten benötigt wird. Der Administrator bekommt die Information übermittelt oder erkennt automatisch, welche Geräte dem Nutzer zur Verfügung stehen und wählt eines der Geräte und die Art der auf die Daten optimierten Verbindung aus.

Wie schon dargelegt, ist es vorteilhaft, wenn der Administrator die Bandbreite (Kapazität) in Abhängigkeit von der Menge der zu übertragenden Daten auswählt.

Um eine komfortable Übertragungsrate zu erzielen, wird er die Bandbreite umso größer wählen, je größer die anstehende Datenmenge ist. Der Administrator wird sich bei der Wahl der Bandbreite danach orientieren, wie hoch die Gesamtbelastung derzeit ist und welche Gesamtübertragungsdauer er dem Nutzer höchstens zumuten mag. Dabei kann die Bedarfsermittlung je nach Richtung der Datenübertragung automatisch oder durch eine vorab gesendete Mitteilung geschehen. Bei der Übertragung hin zum Endgerät kann der Administrator die Art, insbesondere den Umfang und den Übertragungs-Standard, der auf seiner Seite zur Übertragung anstehenden Daten, durch eine Untersuchung in Erfahrung bringen. Stellt er beispielsweise fest, dass es sich um ein größeres MP3-File handelt, wird er eine WLAN Verbindung mit höherer Bandbreite zur Verfügung stellen, während bei einer kleinen E-Mail, z.B. eine Bluetooth Verbindung mit niedriger Bandbreite bevorzugt wird.

Falls vom Endgerät zum Administrator gesendet werden soll, ist es vorteilhaft in einer Art von Header zunächst eine Kurzinformation über die Art der auf Seiten des Endgerätes anstehenden Daten zu senden. An Hand dieser Information kann der Administrator eine optimale Verbindung einrichten. Dabei ist es vorteilhaft, wenn jedes Endgerät es dem Nutzer ermöglicht, bestimmte Nutzungsprofile vorab zu definieren. Anhand der Nutzungsprofile ermittelt das Gerät die voraussichtlich benötigte Bandbreite und gibt diese insbesondere über den Header an den Administrator weiter. Jedes Gerät innerhalb des Empfangsradius erhält somit nur die Bandbreite zur Verfügung gestellt, die es voraussichtlich benötigt. Dabei ist es bei einer vorteilhaften Ausführungsform möglich, dass der Verteiler im Verlauf einer Verbindung je nach Anforderung zwischen den Bändern wechselt. Beispielsweise könnte der Betreff der ausgelesenen E-mail über Bluetooth und der Anhang über schnelles WLAN versendet werden. Der Nutzer an seinem Laptop merkt das Umschalten zwischen den Verbindungen dabei nicht. Ein solcher Wechsel ist auch dann gegeben, wenn über ein erstes Band zunächst eine Information über die Art der nachfolgenden Daten ausgetauscht wird, bevor die Daten über ein anderes der Art angepasstes Band ausgetauscht werden.

Es ist weiterhin vorteilhaft, wenn dem System Profildaten vorgegeben werden, die eine vorherige Festlegung zu erledigender Aufgaben bewirken. Damit kann das Endgerät eine spezifische Übertragungen selbsttätig vornehmen, sobald es sich im Empfangsbereich eines Administrators befindet und ohne dass der Nutzer diesen Vorgang jedes Mal selbst wiederholen muss.

Diese Art der erfindungsgemäßen "flexiblen" Schnittstelle bietet verschiedene Vorteile: So können durch die Definition dieses Schnittstellenstandards, der einen Abgleich verschiedener Profildaten einzelner Geräte und Nutzer mit dem Administrator ermöglicht, spezifische Bandbreitenanforderungen optimal organisiert werden, während zugleich eine komfortable Automation von Diensten gewährleistet ist. Für den Nutzer bietet die Erfindung ein hohes Maß an Komfort, da viele Schritte automatisiert vorgenommen werden. Für den Betreiber des lokalen Netzes, der an der Zurverfügungstellung verdient, ist es von Vorteil, dass sein Netz optimal und damit gewinnmaximiert ausgelastet wird.

Nachfolgend wird die Erfindung anhand eines Ausführungsbeispieles näher erklärt:

In dem Beispiel verfügt der Nutzer über einen Laptop und ein Mobiltelefon, das Organizerfunktionen beinhaltet. Den Laptop nutzt er weitgehend privat. Auf einer entsprechenden Internetseite hat er ihn interessierende Softwareangebote gefunden und für den Download zusammengestellt. Den eigentlichen Download will er aus Zeitgründen jedoch erst vornehmen, wenn ihm eine gewisse Downstream-Bandbreite zur Verfügung steht. Das Mobiltelefon nutzt er beruflich zur E-Mail- und Terminverwaltung. In seinem Nutzerprofil hat er vorgegeben, so oft wie möglich eine Synchronisation mit dem Firmennetzwerk vorzunehmen. Aus Gründen der Zeitersparnis lässt er sich jedoch nur die Betreffzeilen der einzelnen Nachrichten übertragen, um unwichtige Nachrichten aussortieren zu können.

Betritt der Nutzer nun ein Café, das einen Wireless-Accesspoint zur Verfügung stellt, bemerken dies seine Geräte selbständig. Eigenständig bauen sie die benötigte Verbindung unter Berücksichtigung der erforderlichen Bandbreiten auf und erfüllen die zuvor eingestellten Aufgaben. Während der Laptop mit der größtmöglichen Bandbreite den avisierten Download vornimmt, reserviert sich das Mobiltelefon nur eine kleine Bandbreite beispielsweise der Blue Tooth Verbindung und synchronisiert sich selbsttätig mit dem Firmennetzwerk. Die Dienste folgen somit dem Nutzer, ohne dass er sie jeweils neu aktivieren und konfigurieren muss.

Umgesetzt wird das erfindungsgemäße Verfahren mit einem Administrator der eine erste Schnittstelle zu einem externen Netz, insbesondere dem Internet und/oder einem Telephonnetz, und eine zweite Schnittstelle zu einem lokalen Netz aufweist, wobei über die eine zur Datenübertragung geeignete Nahfunkverbindung ein Datenaustausch mit einem im Sende- und Empfangsbereich vorhandenen Endgerät herstellbar ist. Der Administrator weist zudem ein insbesondere durch ein Computerprogramm realisiertes Routermodul auf, das die Art der zur Übertragung anstehenden Daten feststellt und eine der Art entsprechende Verbindung zu einem Endgerät aufbaut. Diese Verbindung ist im Hinblick auf das zur Verfügung stehende Endgerät, auf die Kosten und/oder auf die Übertragungsgeschwindigkeit optimiert.

## Patentansprüche

1. Verfahren zum Datenaustausch vermittels einer drahtlosen Verbindung, wobei ein Nutzer mit einem oder mehreren portablen Endgeräten sich im Sende- und Empfangsbereich mindestens eines Netzes befindet, wobei sich das oder die Endgeräte automatisch beim Netz zum Aufbau einer Verbindung anmelden und wobei im Rahmen der jeweils hergestellten Verbindung ein Übertragungskanal für den Datenaustausch zur Verfügung gestellt wird,
**dadurch gekennzeichnet,**
**dass** von einem dem Netz zuzuordnenden Administrator automatisch die Art, insbesondere die Menge, der zur Übertragung anstehenden Daten festgestellt wird, und
**dass** von dem Administrator ein Übertragungskanal für den Datenaustausch zur Verfügung gestellt wird, der an die Art des Endgerätes und an die Art der zu übertragenden Daten angepasst ist, und dass die Bandbreite des Übertragungskanals und damit dessen Leistungsfähigkeit automatisch angepasst wird an die Menge der zu übertragenden Daten.

2. Verfahren nach Anspruch 1,
**dadurch gekennzeichnet, dass** die Bewegung der Endgeräte über die Grenze eines Netzes hinweg verfolgt wird, wobei je nach Aufenthaltsort Verbindungen zu den dort etablierten Netzen hergestellt werden.

3. Verfahren nach Anspruch 1 oder 2,
**dadurch gekennzeichnet, dass** als Administrator ein fest installiertes Endgerät eingesetzt wird, wobei ein portables Endgerät über den Administrator Zugang erhält zu einem externen Kommunikationsnetz, insbesondere zum Internet oder zu einem Telephonnetz, und wobei das Endgerät die Verbindung über ein Nahfunknetz, insbesondere Blue Tooth oder WLAN, zum Administrator herstellt.

4. Verfahren nach einem der vorherigen Ansprüche,
**dadurch gekennzeichnet, dass** aus mehreren zur Verfügung stehenden Übertragungskanälen ein, insbesondere auf die Verbindungskosten und/oder die Leistungsfähigkeit, optimierter Übertragungskanal ausgewählt wird.

5. Verfahren nach einem der vorherigen Ansprüche,
**dadurch gekennzeichnet, dass** eine Information betreffend die Art der Daten über eine vorab gesendete Kurznachricht vom Endgerät zum Administrator gesendet wird.

6. Verfahren nach einem der vorherigen Ansprüche,
**dadurch gekennzeichnet, dass** der Administrator sich die Information betreffend die Art der Daten vermittels einer Untersuchung des zur Übertragung anstehenden Datei selber beschafft.

7. Verfahren nach einem der vorherigen Ansprüche,
**dadurch gekennzeichnet, dass** im Verlauf einer Verbindung je nach Anforderung und/oder freien Ressourcen zwischen den Übertragungskanälen und/oder den Bandbreiten automatisch gewechselt wird.

8. Verfahren nach einem der vorherigen Ansprüche,
**dadurch gekennzeichnet, dass** im Endgerät ein Nutzerprofil vorgegeben wird, mit dem ein Arbeitsablauf automatisch initiiert wird, sobald das Endgerät in Kontakt zu einem Administrator kommt.

## Claims

1. Method for exchanging data using a wireless connection, a user with one or more portable terminals being located in a transmission and reception range of at least one network, the terminal(s) automatically logging on to the network in order to establish a connection, and a transmission channel being made available for exchanging data within the framework of the respectively established connection,
**characterised**
**in that** the type, in particular the quantity, of data available for transmission is automatically established by an administrator to be allocated to the network, and
**in that** a transmission channel for the data exchange is provided by the administrator, which is adapted to the type of terminal and the type of data to be transmitted, and in that the bandwidth of the transmission channel and thus the handling capacity thereof is automatically adapted to the quantity of data to be transmitted.

2. Method according to Claim 1,
**characterised in that** the movement of the terminals is monitored across the boundary of a network, connections being made to the networks established there, depending on the location.

3. Method according to Claim 1 or 2,
**characterised in that** a permanently installed terminal is used as the administrator, a portable terminal gaining access via the administrator to an external communication network, in particular to the Internet or to a telephone network, and the terminal establishing the connection to the administrator via a short-range radio communication network, in particular Blue Tooth or WLAN.

4. Method according to one of the preceding claims,
**characterised in that** a transmission channel which is optimised, in particular, in terms of connection costs and/or handling capacity is selected from a plurality of available transmission channels.

5. Method according to one of the preceding claims,
**characterised in that** information regarding the type of data is transmitted from the terminal to the administrator via a short message sent in advance.

6. Method according to one of the preceding claims,
**characterised in that** the administrator itself obtains information regarding the type of data by means of an analysis of the data available for transmission.

7. Method according to one of the preceding claims,
**characterised in that** during the course of a connection, a change is automatically carried out between the transmission channels and/or the bandwidths, depending on requirements and/or free resources.

8. Method according to one of the preceding claims,
**characterised in that** a user profile is predefined in the terminal, by which a work cycle is automatically initiated, as soon as the terminal comes into contact with an administrator.

## Revendications

1. Procédé pour échange de données au moyen d'une liaison sans fil, un utilisateur équipé d'un ou de plusieurs terminaux portables se trouvant dans la zone d'émission et de réception d'au moins un réseau, le terminal ou les terminaux s'inscrivant automatiquement sur le réseau pour l'établissement d'une liaison et un canal de transmission pour l'échange de données étant mis à disposition dans le cadre de la liaison respectivement établie,
**caractérisé en ce que**
un administrateur à attribuer au réseau détermine automatiquement la nature, en particulier la quantité des données en attente de transmission, et
**en ce que** l'administrateur met à disposition un canal de transmission pour l'échange de données qui est adapté à la nature du terminal et à la nature des données à transmettre et **en ce que** la largeur de bande du canal de transmission et donc sa capacité est adaptée automatiquement à la quantité des données à transmettre.

2. Procédé selon la revendication 1,
**caractérisé en ce que** le déplacement des terminaux est suivi au-delà de la limite d'un réseau, des liaisons étant établies avec les réseaux établis à cet endroit en fonction du lieu de séjour.

3. Procédé selon la revendication 1 ou 2,
**caractérisé en ce qu'**un terminal installé de façon fixe est utilisé comme administrateur, un terminal portatif ayant accès par l'administrateur à un réseau de communication externe, en particulier à Internet ou à un réseau téléphonique, et le terminal établissant la liaison au moyen d'un réseau radio proche, en particulier Blue Tooth ou WLAN, avec l'administrateur.

4. Procédé selon l'une quelconque des revendications précédentes,
**caractérisé en ce qu'**un canal de transmission optimisé, en particulier par rapport aux frais de liaison et/ou à la capacité, est sélectionné parmi plusieurs canaux de transmission mis à disposition.

5. Procédé selon l'une quelconque des revendications précédentes,
**caractérisé en ce qu'**une information concernant la nature des données est envoyée par un message bref envoyé auparavant depuis le terminal à l'administrateur.

6. Procédé selon l'une quelconque des revendications précédentes,
**caractérisé en ce que** l'administrateur se procure lui-même l'information concernant la nature des données au moyen d'un examen du fichier en attente de le transmission.

7. Procédé selon l'une quelconque des revendications précédentes,
**caractérisé en ce qu'**on alterne automatiquement au cours de la liaison selon la demande et/ou selon des ressources libres entre les canaux de transmission et/ou les largeurs de bande.

8. Procédé selon l'une quelconque des revendications précédentes,
**caractérisé en ce qu'**un profil d'utilisateur est prédéfini dans le terminal, profil avec lequel un processus de travail est amorcé automatiquement dès que le terminal vient en contact avec un administrateur.
